(19)

Europäisches
Patentamt

European
Patent Office

Office européen
des brevets

(11)  **EP 3 995 228 A1**

(12)  **EUROPÄISCHE PATENTANMELDUNG**

(43) Veröffentlichungstag:
**11.05.2022   Patentblatt 2022/19**

(51) Internationale Patentklassifikation (IPC):
***B22D 41/12*** (2006.01)   ***B60L 50/60*** (2019.01)

(21) Anmeldenummer: **20205709.7**

(52) Gemeinsame Patentklassifikation (CPC):
**B22D 41/12; B60L 50/60;** H01M 2220/20

(22) Anmeldetag: **04.11.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Primetals Technologies Austria GmbH
4031 Linz (AT)**

(72) Erfinder:
• **Hartl, Franz
4720 Kallham (AT)**

• **Melcher, Andreas
4491 Niederneukirchen (AT)**
• **Rohrhofer, Andreas
4070 Eferding (AT)**
• **Köhler, Monika
4482 Ennsdorf (AT)**

(74) Vertreter: **Metals@Linz
Primetals Technologies Austria GmbH
Intellectual Property Upstream IP UP
Turmstraße 44
4031 Linz (AT)**

(54)   **FAHRZEUG ZUM TRANSPORT VON FESTEN ODER FLÜSSIGEN MATERALIEN**

(57)   Die Erfindung betrifft ein Fahrzeug (2) und eine Industrieanlage.

Das Fahrzeug (2) wird bevorzugt zum Transport von festen oder flüssigen Materialien in einer Industrieanlage verwendet. Das Fahrzeug (2) führt einen vorgegebenen Fahrzyklus zwischen zumindest zwei Orten aus. Das Fahrzeug (2) weist einen mittels Akku (1), welcher eine vorgegebene Akku Kapazität aufweist, betriebenen Antrieb (4) auf.

Die Aufgabe der vorliegenden Erfindung ist es ein Fahrzeug (1) zur Verfügung zu stellen, welches einerseits den Transport zwischen einem Ausgangsort und einem Zielort sicherstellt, möglichst wartungsfrei und emmisionsfrei ist, sowie niedrige Anschaffungs- und Betriebskosten aufweist.

Die Aufgabe wird gelöst durch einen Akku (1) welcher schnellladefähig mit einem C-Faktor von 0,5-5 ist. Die Akku Kapazität ist derart festgelegt, dass diese größer als eine notwendige Gesamtenergie und kleiner als das Dreifache der notwendigen Gesamtenergie ist. Die Gesamtenergie sich aus der Summe jener Energie für den Antrieb (7) und sonstiger Verbraucher ergibt, welche zum Ausführen des vorgegebenen Fahrzyklus, benötigt wird.

Fig. 2

**Beschreibung**

Gebiet der Technik

Die Erfindung betrifft ein Fahrzeug, bevorzugt ein Fahrzeug zum Transport von festen oder flüssigen Materialien in einer Industrieanlage, bevorzugt in einer metallurgischen Industrieanlage. Dieses führt einen vorgegebenen Fahrzyklus zwischen zumindest zwei Orten aus und umfasst einen mittels Akku betriebenen Antrieb, wobei der Akku eine vorgegebene Akku Kapazität aufweist.

Des Weiteren betrifft die Erfindung eine Industrieanlage umfassend einen Ausgangsort, an welchem eine erste Produktionsanlage, eine erste Halteposition und/oder erster Lagerplatz angeordnet ist und einem Zielort an welchem eine zweite Produktionsanlage oder zweiter Lagerplatz und/oder zweite Haltestation angeordnet ist. Ein Fahrzeug führt zwischen Ausgangsort und Zielort einen Transport von festen oder flüssigen Materialen nach einem vorgegebenen Fahrzyklus durch.

Stand der Technik

Innerhalb von Industrieanlagen, bevorzugt in metallurgischen Industrieanlagen, werden verschiedenste Materialen mithilfe von Fahrzeugen von einem Ausgangsort an einen vorgegebenen Zielort transportiert. In einer metallurgischen Anlage werden bei der Erzeugung von Flüssigmetallschmelzen üblicherweise Schrottkörbe - in einem Elektro Stahlwerk - oder Schrottschurren in einem Konverter-Stahlwerk - verwendet. Diese metallurgischen Gefäße werden mit Hilfe von Schienenfahrzeugen von einem Ausgangsort - beispielsweise vom Schrottplatz - zum Zielort - einem Stahlwerk - befördert. Die Wege welches ein Transportfahrzeugs für Schrott zurücklegt können sich auf über einen Kilometer belaufen. Hierbei sind die Schienenstränge nicht immer gerade und es sind des Weiteren in einigen Anlagen Straßenkreuzungen zu passieren.

Bei Fahrzeugen für eine metallurgische Industrieanlage die mit dem Transport von Roheisen, Flüssigstahl oder Schlacke längere Transportwege zurücklegen müssen und ein Kabel oder Schleifleitungen, welche unwirtschaftlich sind, als Energiezufuhr ausscheiden, können bis dato nur teure Lösungen mit Verbrennungsantrieben - vorwiegend Dieselaggregate - eingesetzt werden.

Ebenso werden die verwendeten Fahrzeuge oftmals mit Elektromotoren angetrieben. Eine Versorgung mit elektrischer Energie erfolgt hierbei wie bereits eingehend erläutert über Kabel, aufgerollt an einer Kabeltrommel. Durch diese Realisierung ist es aber nicht möglich Schienenkreuzungen zu überwinden, da das abgerollte Kabel die Fahrzeuge auf den querenden Schienen behindern würde. Kann dies nicht verhindert werden, müssen Fahrzeuge mit Dieselaggregaten verwendet werden.

Darüber hinaus besteht die Gefahr der Zerstörung der elektrischen Kabel durch herabfallende Schrottteile während des Beladens oder Transports.

Fahrzeuge mit Dieselaggregaten bedingen aber einen hohen Wartungsaufwand der von den Betreibern als Hindernis gesehen wird und mit laufenden Kosten behaftet ist, welche durch Wartung/Service, Kraftstoff und Betankung entstehen. Auch geben dieselelektrisch betriebene Fahrzeuge keine Antwort auf die umwelttechnischen Fragen unserer Zeit.

Zusammenfassung der Erfindung

Die Aufgabe der vorliegenden Erfindung ist es ein Fahrzeug zur Verfügung zu stellen, welches einerseits den Transport zwischen einem Ausgangsort und einem Zielort sicherstellt, möglichst wartungs- und emmisionsfrei ist, sowie niedrige Anschaffungs- und Betriebskosten aufweist.

Die Aufgabe wird gelöst durch einen Akku der schnellladefähig mit einem C-Faktor von 0,5-5, ist. Die Akku Kapazität wird derart festgelegt, dass diese die notwenige Gesamtenergie abdeckt und die Akku Kapazität kleiner als das Dreifache, besonders bevorzugt als das Zweifache, einer notwendigen Gesamtenergie ist. Die Gesamtenergie ergibt sich aus einer benötigten Energie für den Antrieb und für sonstige Verbraucher, welche durch den Akku versorgt werden. Die Gesamtenergie ist jene Energie, welche zum Ausführen des vorgegebenen Fahrzyklus benötigt wird.

Durch einen schnellladefähigen Akku ist sichergestellt, dass die für den Fahrzyklus notwendige Gesamtenergie in der Zeit - während sich das Fahrzeug im Stillstand befindet - geladen werden kann. Solche Stillstände sind beispielsweise beim Beladen oder Entladen eines Schrottkorbes.

Schnellladefähige Akkus sind beispielsweise Li-Po, Li-Ion, Li-Fe Akkumulatoren, ähnlich zu denen, wie sie in der Automobilindustrie zum Einsatz kommen. Der C-Faktor stellt eine Quantifizierung für Lade- und Entladeströme für Akkus dar und berechnet sich anhand der Gleichung 1.

$$C = \frac{I_{max}}{\text{CN}} \qquad (\text{Gleichung 1})$$

$I_{max}$: maximaler Ladestrom [A],
CN: Akkukapazität in [Ah]

Die Kapazität des Akkus wird streng nach der notwendigen Energie für einen Fahrzyklus ausgerichtet. Das bedeutet, dass die Kapazität des Akkus mindestens der notwendigen Gesamtenergie für einen Fahrzyklus entspricht. Die Maximale Obergrenze der Kapazität des Akkus liegt bei der dreifachen Gesamtenergie, welche für einen Fahrzyklus notwendig wäre.

$$W_{Antrieb}[kWh] = \sum P_{Antrieb}\, t_{Antrieb} \quad (\text{Gleichung 2})$$

$$W_{Verbraucher}[kWh] = \sum P_{Verbraucher}\, t_{Verbraucher} \quad (\text{Gleichung 3})$$

$$W_{Akku,min}[kWh] = W_{Antrieb}[kWh] + W_{Verbraucher}[kWh] \quad (\text{Gleichung 4})$$

Die Energie $W_{Antrieb}$ ist jene Energie, welche für einen Fahrzyklus vom Antrieb verbraucht wird. Diese setzt sich aus der benötigten Antriebsleistung $P_{Antrieb}$ und der jeweiligen Zeit $t_{Antrieb}$ zusammen. Die Zeit $t_{Antrieb}$ ergibt sich aus einer Weglänge und einer Durchschnittsgeschwindigkeit für den Fahrzyklus.

In einer sehr einfachen Form kann die benötigte Antriebsleistung bei bekanntem Gesamtgewicht des Fahrzeuges und befördertem Material wie folgt berechnet werden:

→Summe aus Rollwiderstands $F_r$, Luftwiderstand $F_L$, Steigungswiderstand $F_\alpha$, Beschleunigungswiderstand $F_a$.
→Gesamtwiderstand:

$$F_{ges} = F_R + F_L + F_\alpha + F_a \quad (\text{Gleichung 5})$$

→Benötigte Leistung $P_{Ant}$ bei vorgegebenen Geschwindigkeit v:

$$P_{Ant} = F_{ges} * v$$

→Antriebsleistung $P_{Antrieb}$ bei bekanntem Wirkungsgrad des Antriebs η:

$$P_{Antrieb} = \frac{P_{Ant}}{\eta} \quad (\text{Gleichung 6})$$

Auf dem Fahrzeug sind auch Verbraucher, wie beispielsweise eine Steuer- und/oder Regeleinrichtung, Messeinrichtungen und/oder Datenübertragungseinrichtungen vorhanden, welche während des Fahrzyklus ebenfalls mit Energie versorgt werden müssen. Die Energie für die Verbraucher $W_{Verbraucher}$ setzt sich aus der Leistung $P_{Verbraucher}$ und der Zeit $t_{Verbraucher}$, in welchen die jeweiligen Verbraucher Energie benötigen, zusammen. Aus der Summe der Energie des Antriebs und der Energie für die Verbraucher ergibt sich eine minimal benötigte Energie des Akkus $W_{Akku,min}$. Die Verwendung von Akkus mit einer Kapazität, die dem dreifachen dieser minimalen Energie entspricht, ist aus Gründen der Sicherheit und auch aufgrund einer eintretenden Alterung des Akkus notwendig.
Durch die Verwendung eines Akkus, welcher speziell für den jeweiligen Fahrzyklus ausgelegt ist, können Kosten und Abmessungen des Akkus so gering wie nötig gehalten werden.

In einer bevorzugten Ausführungsvariante sind die sonstigen Verbraucher eine Steuer- und/oder Regelungseinrichtung, Sicherheitseinrichtungen, Messsensoren und/oder eine Datenübertragungseinrichtung.

Eine bevorzugte Ausführung sieht vor, dass der Akku modular aufgebaut ist und die Akkukapazität erweitert oder reduziert werden kann. Der Akku ist aus mehreren - zumindest zwei - Akkumodulen zusammengesetzt und in Form eines Schubladen Systems realisiert. Damit kann sichergestellt werden, dass im Falle eines Defektes eines Akkumoduls dieses schnell ausgetauscht werden kann. Des Weiteren würde dies auch den Vorteil bringen, dass eine Redundanz und Modularität für einen anderen Fahrzeugtyp gegeben ist.

Eine zweckmäßige Ausführung sieht vor, dass das Fahrzeug ein Schrottfahrzeug zum Transport von Schrott in einer metallurgischen Anlage, ein Torpedofahrzeug zum Transport von flüssiger Metallschmelze oder ein Pfannenwagen zum Transport von flüssiger Metallschmelze ist. Diese Fahrzeuge führen vorgegebene Fahrzyklen aus und eigenen sich deshalb besonders gut, um mit dem Erfindungsgemäßen Fahrzeug betrieben zu werden.

Eine vorteilhafte Ausführungsform sieht vor, dass der Akku derart ausgestaltet ist, dass ein Fahrzyklus für eine Strecke von mindestens 0,5km und maximal von 20km, bevorzugt mindestens 0,5km und maximal 10km, besonders bevorzugt mindestens 0,5km und maximal 2km bewältigt werden kann.

In einer besonders bevorzugten Ausführungsform ist das Fahrzeug ein schienengebundenes Fahrzeug.

Die Aufgabe wird auch durch eine Industrieanlage gelöst, welche ein Fahrzeug aufweist, dass derart ausgestaltet ist wie zuvor beschrieben. Die Industrieanlage weist zumindest eine Akku Ladestation auf, welche am Ausgangsort und / oder am Zielort angeordnet ist.

Kurze Beschreibung der Zeichnungen

In Fig. 1 ist ein Fahrzeug zum Transport von flüssigen oder festen Materialien dargestellt.

In Fig. 2 ist beispielhaft eine Industrieanlage dargestellt.

Beschreibung der Ausführungsformen

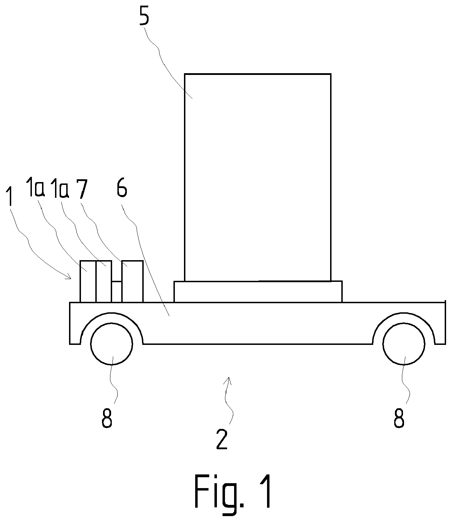

In Fig. 1 ist ein Fahrzeug 2 zum Transport von flüssigen oder festen Materialien dargestellt. Das Fahrzeug besteht zumindest aus dem Fahrgestell 2, einem metallurgischen Gefäß 5, einem Antrieb 7 und einem schnelladefähigem Akku 1. Das metallurgische Gefäß 5 ist beispielsweise ein Schrottkorb, eine Pfanne oder ein Schlackekübel. Der Antrieb 7 wird durch den Akku 1 mit Energie versorgt. Der Antrieb 7 ist beispielsweise ein Elektromotor, welcher Räder 8 des Fahrzeugs antreibt. Der schnellladefähige Akku 1 weist eine bestimmte Akku Kapazität auf. Diese hängt von der Strecke des Fahrzyklus und der benötigten Zeit für die Absolvierung des vorgegebenen Fahrzyklus ab. Weitere Einflussgröße sind das Gesamtgewicht des Fahrzeuges, das Gewicht der zu transportierenden Materialien und der benötigten Energie für sonstige Verbraucher, wie beispielsweise Messeinrichtungen oder Datenübertragungseinrichtungen. Der Akku 1 ist modular aufgebaut und besteht aus zumindest zwei Akkumodulen 1a.

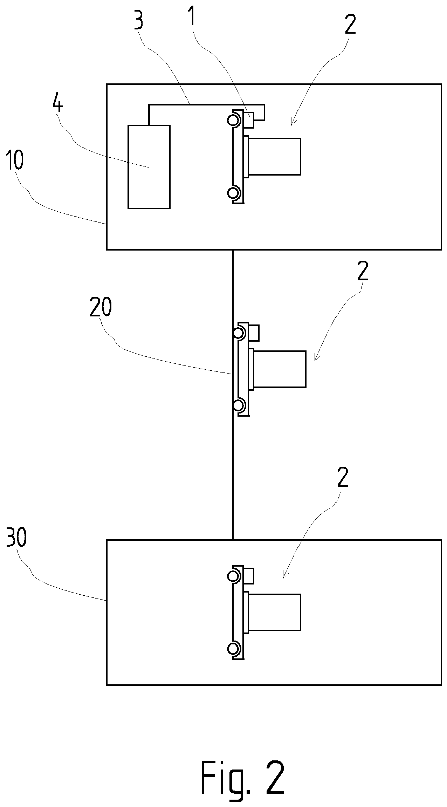

In Fig. 2 ist beispielhaft eine Industrieanlage mit einem Anfangsort 10 - dies kann beispielsweise ein Schrottplatz sein - und einem Zielort 20 - beispielsweise ein Elektrolichtbogenofen oder ein Stahlwerk mit einem Konverter - dargestellt. Am Anfangsort 10 wird das Fahrzeug 2 einerseits mit zu transportierenden Materialen beladen und andererseits wird der schnelladefähige Akku 1 mit Hilfe eines Ladekabels 3 durch eine Ladestation 4 aufgeladen. Nach Beendigung des Beladens des Fahrzeuges 2 mit zu transportierenden Materialien und/oder des Aufladens des schnelladefähigen Akkus 1 kann das Fahrzeug über Schienen 20 oder einen Fahrweg zum Zielort 30 fahren. Am Zielort 30 kann ebenso eine Ladestation 4 sein, es ist aber auch denkbar, dass nur am Anfangsort 10 eine Ladestation 4 vorhanden ist. Dies hängt unter anderem davon ab wie lange die Aufenthaltszeit am jeweiligen Ort ist und wie es sich für den vorgegebenen Fahrzyklus am besten ausgeht. Es ist auch denkbar, dass eine Ladestation 4 im Bereich der Schienen 20 vorhanden ist.

Ein typischer Fahrzyklus kann wie folgt ausschauen:

- Schrottbeladung: Beladung des Schrottkorbs am Schrottplatz mit einer Zeitdauer von 30 Minuten
- Schrott Transport zum Elektrolichtbogenofen: Transport des befüllten Schrottkorbs mithilfe des Fahrzeuges 2 vom Schrottplatz zum Elektrolichtbogenofen mit einer Zeitdauer von 5 bis 10 Minuten abhängig von der Entfernung.
- Schrott Chargierung: Chargierung des Schrottkorbes in den Elektrolichtbogenofen mit einer Zeitdauer von ungefähr 5 Minuten
- Rückfahrt zum Schrottplatz: Transport des leeren Schrottkorbs vom Stahlwerk zum Schrottplatz mit einer Zeitdauer von 5 bis 10 Minuten abhängig von der Entfernung.

Es kann während der Fahrt immer zu Unterbrechungen aufgrund von Wartezeiten oder betrieblichen Gründen kommen. Die Ladestationen 4 sind aber fix vorgegeben, bevorzugt beim Schrottplatz und/oder beim Elektrolichtbogenofen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1 Akku
1a Akkumodul
2 Fahrzeug
3 Ladekabel
4 Ladestation
5 Metallurgisches Gefäß
6 Fahrgestell
7 Antrieb
10 Ausgangort
20 Fahrweg
30 Zielort


**Patentansprüche**

1. Fahrzeug, bevorzugt Fahrzeug (2) zum Transport von festen oder flüssigen Materialien in einer Industrieanlage, bevorzugt in einer metallurgischen Industrieanlage, welches einen vorgegebenen Fahrzyklus zwischen zumindest zwei Orten ausführt und einen mittels Akku (1), welcher eine vorgegebene Akku Kapazität aufweist, betriebenen Antrieb (7) umfasst, **dadurch gekennzeichnet, dass** der Akku (1) schnellladefähig mit einem C-Faktor von 0,5-5 ist, wobei die Akku Kapazität derart festgelegt ist, dass diese größer als eine notwendige Gesamtenergie und kleiner als das Dreifache, bevorzugt das Zweifache, der notwendigen Gesamtenergie ist, wobei die Gesamtenergie sich aus einer Summe jener Energie für den Antrieb (7) und sonstiger Verbraucher - welche durch den Akku (1) versorgt werden - ergibt, welche zum Ausführen des vorgegebenen Fahrzyklus benötigt wird.

2. Fahrzeug nach Anspruch 1, **dadurch gekennzeichnet, dass** die sonstigen Verbraucher eine Steuer- und/oder Regelungseinrichtung, Sicherheitseinrichtungen, Messsensoren und/oder ein Datenübertragungseinrichtung ist.

3. Fahrzeug nach Anspruch 1, **dadurch gekennzeichnet, dass** der Akku (1) modular aufgebaut, wobei der Akku aus zumindest zwei Akkumodulen (1a) besteht.

4. Fahrzeug nach Anspruch 1, **dadurch gekennzeichnet, dass** das Fahrzeug (2) ein Schrottfahrzeug zum Transport von Schrott in einer metallurgischen Anlage, ein Torpedofahrzeug zum Transport von flüssiger Metallschmelze oder ein Pfannenwagen zum Transport von flüssiger Metallschmelze ist.

5. Fahrzeug nach Anspruch 1, **dadurch gekennzeichnet, dass** der Akku (1) derart ausgestaltet ist, dass ein Fahrzyklus für eine Strecke von mindestens 0,5km und maximal von 20km, bevorzugt mindestens 0,5km und maximal 10km, besonders bevorzugt mindestens 0,5km und maximal 2km bewältigt werden kann.

6. Fahrzeug nach Anspruch 1, **dadurch gekennzeichnet, dass** das Fahrzeug (2) ein schienengebundenes Fahrzeug ist.

7. Industrieanlage umfassend einen Ausgangsort, an welchem eine erste Produktionsanlage, eine erste Halteposition und/oder erster Lagerplatz angeordnet ist und einem Zielort an welchem eine zweite Produktionsanlage oder zweiter Lagerplatz und/oder zweite Haltestation angeordnet ist, wobei ein Fahrzeug (2) zwischen Ausgangsort (10) und Zielort (30) einen Transport von festen oder flüssigen Materialen nach einem vorgegebenen Fahrzyklus durchführt, **dadurch gekennzeichnet, dass** das Fahrzeug (2) nach einem der Ansprüche 1-6 ausgestaltet ist, wobei zumindest eine Akku Ladestation (4) vorhanden ist, welche am Ausgangsort (10) und / oder am Zielort (30) angeordnet ist.

Fig. 1

Fig. 2

Europäisches Patentamt
European Patent Office
Office européen des brevets

## EUROPÄISCHER RECHERCHENBERICHT

Nummer der Anmeldung

EP 20 20 5709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/173845 A1 (PRIMETALS TECHNOLOGIES AUSTRIA GMBH [AT]) 3. November 2016 (2016-11-03) * Seite 1, Zeile 5 - Zeile 25 * * Seite 5, Zeile 33 - Seite 6, Zeile 32 * * Abbildung 1 * ----- | 1-7 | INV. B22D41/12 B60L50/60 |
| A | US 2013/229153 A1 (SARKAR REUBEN [US] ET AL) 5. September 2013 (2013-09-05) * Absatz [0044] - Absatz [0057]; Abbildungen 1-7 * ----- | 1-7 | |
| A | "Railway applications - Rolling stock - Batteries for auxiliary power supply systems - Part 1: General requirements", IEC 62973-1:2018, IEC, 3, RUE DE VAREMBÉ, PO BOX 131, CH-1211 GENEVA 20, SWITZERLAND, 19. März 2018 (2018-03-19), Seiten 1-72, XP082013722, [gefunden am 2018-03-19] * Seite 46, Zeile 1 - Seite 56, Zeile 5 * ----- | 1-7 | RECHERCHIERTE SACHGEBIETE (IPC) B22D H01M B60L |
| A | US 3 955 657 A (BOSSI OSCAR) 11. Mai 1976 (1976-05-11) * Seite 5, Zeile 1 - Seite 6, Zeile 34 * ----- | 1-7 | |

Der vorliegende Recherchenbericht wurde für alle Patentansprüche erstellt

| Recherchenort | Abschlußdatum der Recherche | Prüfer |
|---|---|---|
| Den Haag | 19. Februar 2021 | Pipoli, Tiziana |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 5709

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2021

| Im Recherchenbericht angeführtes Patentdokument | Datum der Veröffentlichung | Mitglied(er) der Patentfamilie | Datum der Veröffentlichung |
|---|---|---|---|
| WO 2016173845 A1 | 03-11-2016 | AT 517153 A1<br>WO 2016173845 A1 | 15-11-2016<br>03-11-2016 |
| US 2013229153 A1 | 05-09-2013 | AU 2011305427 A1<br>BR 112013007078 A2<br>CA 2812283 A1<br>CN 103238264 A<br>CO 6710927 A2<br>EP 2619877 A2<br>TW 201230599 A<br>US 2013229153 A1<br>WO 2012040369 A2 | 11-04-2013<br>24-09-2019<br>29-03-2012<br>07-08-2013<br>15-07-2013<br>31-07-2013<br>16-07-2012<br>05-09-2013<br>29-03-2012 |
| US 3955657 A | 11-05-1976 | KEINE | |

EPO FORM P0461

Für nähere Einzelheiten zu diesem Anhang : siehe Amtsblatt des Europäischen Patentamts, Nr.12/82